# EUROPEAN PATENT SPECIFICATION

(11) **EP 2 727 767 B1**
(45) Date of publication and mention of the grant of the patent: **20.12.2017**
(21) Application number: 12397529.4
(22) Date of filing: 02.11.2012
(51) Int. Cl.: B60P 7/08

(54) **A tightening device**
Spannvorrichtung
Dispositif de serrage

(43) Date of publication of application: 07.05.2014
(73) Proprietor: NWE Network Engineering Oy Ab, 64200 Närpiö (FI)
(72) Inventor: Wildi, Mikhael Leonard, Vale of Glamorgan CF62 6QX (GB); Pinchen, Colin, Prenton, Birkenhead Cheshire CH42 8PS (GB); Rönnskog, Mats, 64210 Kalax (FI)
(74) Representative: Berggren Oy, Tampere

(56) References cited:
- US-A- 2 075 711
- US-A- 3 520 555
- US-A- 5 234 298
- US-B1- 7 112 023

## Description

### Field of the Invention

The present invention relates to a device for securing cargo on a load platform.

### Background of the Invention

When goods are loaded onto any type of conveyance vehicle for the carrying of cargo the cargo is required to be secured to the vehicle load platform for land, sea and air transportation. In many cases the lashing procedure is conducted manually with close operator involvement and can be time consuming involving the operator in many separate manual operations. Sometimes this may also represent hazardous situations such as for example falling cargo or having to climb onto the load platform and also it may be impracticable for an operator to achieve the correct cargo securing process manually.

The patent US-3,520,555 discloses a bale pack tie down, for installation on a flat bed vehicle adapted for transporting a plurality of spaced stacks of bales. The bale pack tie down has a plurality of bale binder lines attached to opposed ends of the vehicle bed. The tie down includes an adjustable frame having crank structures for winding tie down ropes each attached to a pulley adapted to engage a respective bale binder line and automatic locking ratchets. The tie down frame is adjusted to the vehicle bed and mounted thereon between adjacent stacks of bales. Tension is adjusted and maintained in the respective bale binder lines by drawing the respective lines, by means of the tie down ropes, into the space between the stacks of bales. Bales may be placed in stacks on a flat bed and tied down with bale binder lines, which extend longitudinally so as to engage the top surface of the respective stacks. The binder lines are then secured to the opposite end of the vehicle bed. A grooved rim is engaged with a respective line and the crank can be turned by a handle so as to rotate the respective rodsto lower the wheel thereby depressing the respective lines into the space between the adjacent stacks. The automatic locking ratchets engage the end to prevent the respective rods from reversing and thereby maintain the desired tension in the respective line. However, the length of the lines is fixed wherein the system is not very flexible so that it could adjust itself on the basis of the height of the cargo.

Additionally the system of the patent US-3,520,555 requires space between the items in cargo longitudinally limiting the possibilities to load the cargo space effectively.

### Summary of the Invention

One aim of the present invention is to overcome the above problems and provide a take-up device with a cable, a rope, a cord or a webbing line pulley system that has varying degrees of automation within the system that allows tension to be substantially simultaneously applied to an integrated cargo restraint system over the length of a load until the load is secured and restrained tied down to the vehicle bed. The cable, rope, cord or webbing line will be for ease of reading referred to as a cable throughout the remainder of the specification. According to an aspect of the present invention there is provided a device for securing cargo on a load platform comprising:
a tensioning element suitable for substantially simultaneously introducing a lashing tension force on a load on one or more locations to hold the load on the load platform;
a set of pulleys for guiding the tensioning element along the load; and
a take up mechanism for activating the tensioning element for holding the load;
characterised in that the take up mechanism (1) is adapted to adjust the cable length along the length of the load for accommodating varying load heights throughout the length of the cargo (6); and that the device further comprises tension force sensors to activate and stop the take-up when a correct tension force has been achieved.

The present invention provides several advantages. Some embodiments will partly or fully obviate the need for a lashing device to be tensioned manually and will give a high degree of reliability in regard to the application of the correct lashing force that can automatically adjust should any load settlement be encountered and the system can be operated with much reduced physical involvement by the operator and can be operated by controls on the take-up mechanism or remotely both with the operator remaining at floor level and generally improve the speed of the lashing process and may reduce the expose to hazard risk.

### Brief Description of the Drawings

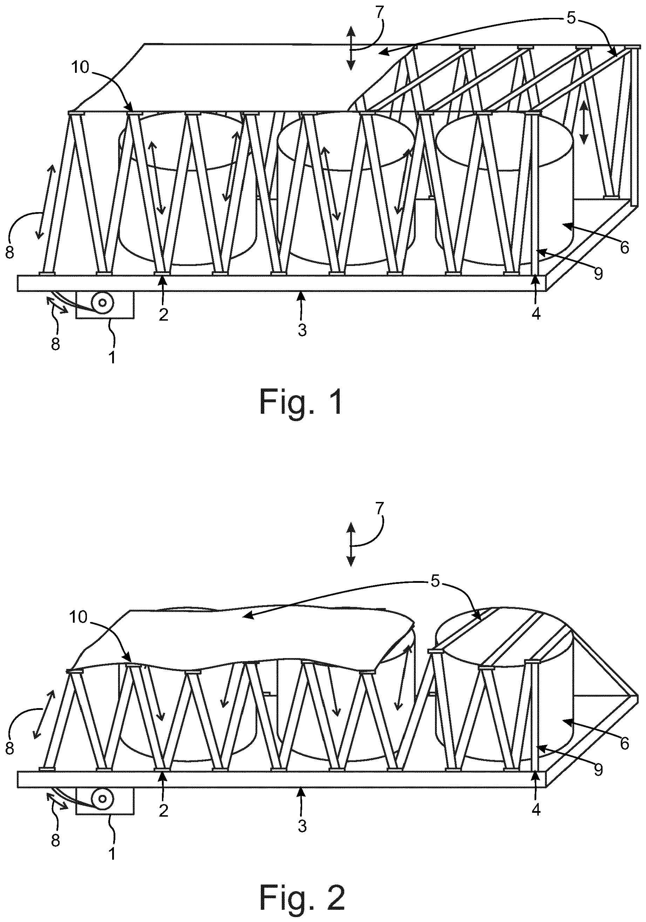

An example of the invention will now be described referring to the accompanying drawings, in which
- Figure 1: shows an example of a load platform with examples of loaded cargo goods showing two possible examples of load restraint securing systems that in general use may or may not be combined into one system that are positioned over the load prior to the take-up mechanism being activated; and
- Figure 2: shows an example of when the system has been activated to tie down the cargo the load restraint device has been pulled down over the load by the action of the cable take-up mechanism and secured the load at the appropriate lashing force.

### Detailed Description of the Invention

Take up mechanism 1, one or more take-up devices are attached to the vehicle or load carrying platform 3 from which cable 9 runs from the take-up mechanism through and between a series of pulleys attached to lashing points on the vehicle load bed floor 2 pulleys and attached to the lashing system 10. The cable is anchored at the opposite end 4 to the take-up mechanism 1. Example of a lashing system 5. Within the series of load platform lashing points 2 there are load tension sensors positioned appropriately.

Once the load is on board the load platform and ready to secure the take-up device 1 is activated and the cable 9 is taken up. This action draws the cable through the series of pulleys and tensions the lashing system down onto the load 6. The take up-mechanism allows the cable length to substantially simultaneously self-adjust in all positions along the length of the load therefore can accommodate varying load heights throughout the length of the cargo. The tension force sensors located at appropriate points within the system activate and stop the take-up when the correct tension force has been achieved. Should load settlement occur and cause a loosening of the tension force the sensors with reactivate the take up mechanism until the correct tension force has been re-established.

To release the lashing system from the load the action of the take-up device is reversed and the cord relaxes and pays out in reverse and releases the lashing force of the restraint system and thus releases the load for discharge.

The drawing number reference key indicates examples of one part within the system where there may be several occurring throughout the system.

The variability of direction in the take-up mechanism is indicated with the reference number 8, and the variability of movement in the lashing system is indicated with the reference number 7.

The present invention allows the restraining of cargo to be either an automatic or semi-automatic operation using a take-up mechanism or mechanisms that tension down a suspended or unsuspended cargo restraint securing system to secure and tie down the cargo load to the vehicle load bed.

In some embodiments the system can accommodate and tension down loads of varying heights due to the self-adjusting characteristics of the take-up system.

In some embodiments the system can maintain the lashing tension force automatically throughout the journey cycle.

## Claims

1. A device for securing cargo (6) on a load platform (3) comprising:
a tensioning element (9) suitable for substantially simultaneously introducing a lashing tension force on a load on more locations to hold the load on the load platform;
a series of pulleys (10) for guiding the tensioning element (9) along the load; and
a take up mechanism (1) for activating the tensioning element for holding the load;
**characterised in that** the take up mechanism (1) adjusts the cable length along the length of the load for accommodating varying load heights throughout the length of the cargo (6); and that the device further comprises tension force sensors to activate and stop the take-up when a correct tension force has been achieved.

2. The device according to claim 1, wherein the combination of the tensioning element (9) and the set of pulleys (10) is adjustable in height for holding loads of different heights.

3. The device according to claim 1 or 2, wherein the take up mechanism is adapted for maintaining a certain lashing tension force on the load.

4. The device according to claim 1, 2, or 3 wherein the tensioning element comprises a cable, a rope, a cord or a webbing line.

5. The device according to any of the claims 1 to 4 wherein the take up mechanism is further adapted for releasing the tensioning element for removing the load from the cargo load platform.

6. The device according to any of the claims 1 to 5 wherein the sensors are adapted to measure a tension force affecting to the load.

7. The device according to claim 6 wherein the device further comprises means for using the tension force measurement to control the take up mechanism.

## Patentansprüche

1. Eine Vorrichtung zum Sichern von Fracht (6) auf einer Ladeplattform (3), die Folgendes aufweist:
ein Spannelement (9), das geeignet ist, im Wesentlichen gleichzeitig eine Verzurrspannkraft auf ein Ladegut an mehreren Stellen einzubringen, um das Ladegut auf der Ladeplattform zu halten;
ein Satz Riemenscheiben (10) zum Führen des Spannelements (9) entlang des Ladeguts; und
einen Aufnahmemechanismus (1) zum Aktivieren des Spannelements zum Halten des Ladeguts;
**dadurch gekennzeichnet, dass** der Aufnahmemechanismus (1) die Kabellänge entlang der Länge des Ladeguts zur Aufnahme unterschiedlicher Ladehöhen über die gesamte Länge der Fracht (6) einstellt; und dass die Vorrichtung darüber hinaus Spannkraftsensoren aufweist, um die Aufnahme zu aktivieren und anzuhalten, wenn eine korrekte Spannkraft erzielt wurde.

2. Vorrichtung gemäß Anspruch 1, wobei die Kombination aus Spannelement (9) und dem Satz Riemenscheiben (10) höheneinstellbar ist, um Ladegut verschiedener Höhe zu halten.

3. Vorrichtung gemäß Anspruch 1 oder 2, wobei der Aufnahmemechanismus ausgestaltet ist, um eine gewisse Verzurrspannkraft am Ladegut aufrechtzuerhalten.

4. Vorrichtung gemäß Anspruch 1, 2 oder 3, wobei das Spannelement ein Kabel, ein Seil, eine Schnur oder ein Gurtband aufweist.

5. Vorrichtung gemäß einem der Ansprüche 1 bis 4, wobei der Aufnahmemechanismus darüber hinaus zum Lösen des Spannelements zur Entfernung des Ladeguts von der Frachtladeplattform ausgebildet ist.

6. Vorrichtung gemäß einem der Ansprüche 1 bis 5, wobei die Sensoren ausgebildet sind, um eine sich auf das Ladegut auswirkende Spannkraft zu messen.

7. Vorrichtung gemäß Anspruch 6, wobei die Vorrichtung darüber hinaus Mittel aufweist, um die Spannkraftmessung zum Steuern des Aufnahmemechanismus einzusetzen.

## Revendications

1. Dispositif permettant d'arrimer un fret (6) sur une plateforme de chargement (3), comprenant :
un élément de mise en tension (9) approprié pour introduire de manière essentiellement simultanée une force de tension d'arrimage sur une charge au niveau de plusieurs emplacements afin de retenir la charge sur la plateforme de chargement ;
une série de poulies (10) permettant de guider l'élément de mise en tension (9) le long de ladite charge ; et
un mécanisme de reprise de tension (1) permettant d'activer l'élément de mise en tension afin de retenir la charge ;
**caractérisé en ce que** le mécanisme de reprise de tension (1) ajuste la longueur de câble le long de la longueur de la charge afin d'accueillir diverses hauteurs de charge sur toute la longueur du fret (6) ; et le dispositif comprend en outre des capteurs de force de tension afin d'activer et arrêter la reprise de tension lorsqu'une force de tension correcte a été obtenue.

2. Dispositif selon la revendication 1, dans lequel la combinaison de l'élément de mise en tension (9) et de la série de poulies (10) peut être ajustée en hauteur afin de retenir des charges de différentes hauteurs.

3. Dispositif selon la revendication 1 ou 2, dans lequel le mécanisme de reprise de tension est conçu pour maintenir une certaine force de tension d'arrimage sur la charge.

4. Dispositif selon la revendication 1, 2, ou 3, dans lequel l'élément de mise en tension comprend un câble, une corde, une cordelette ou une sangle.

5. Dispositif selon l'une quelconque des revendications 1 à 4, dans lequel le mécanisme de reprise de tension est en outre conçu pour libérer l'élément de mise en tension afin de retirer la charge de la plateforme de chargement de fret.

6. Dispositif selon l'une quelconque des revendications 1 à 5, dans lequel les capteurs sont conçus pour mesurer une force de tension affectant la charge.

7. Dispositif selon la revendication 6, dans lequel le dispositif comprend en outre un moyen permettant d'utiliser la mesure de force de tension pour commander le mécanisme de reprise de tension.
